(19) Europäisches Patentamt
European Patent Office
Office européen des brevets

(11) EP 2 524 934 A2

(12) # EUROPÄISCHE PATENTANMELDUNG

(43) Veröffentlichungstag:
**21.11.2012 Patentblatt 2012/47**

(51) Int Cl.:
***C08G 18/38** (2006.01)* ***C08G 18/66** (2006.01)*

(21) Anmeldenummer: **12075044.3**

(22) Anmeldetag: **09.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.05.2011 DE 102011101980**

(71) Anmelder: **GT Elektrotechnische Produkte GmbH**
**79761 Waldshut-Tiengen (DE)**

(72) Erfinder: **Paulmann, Uwe**
**79790 Küssaberg (DE)**

(74) Vertreter: **Gulde, Klaus W.**
**Anwaltskanzlei**
**Gulde, Hengelhaupt, Ziebig & Schneider**
**Wallstrasse 58/59**
**10179 Berlin (DE)**

(54) **Thermoplastische Poly(urethan-harnstoffe) mit bioziden Eigenschaften und Verfahren zu ihrer Herstellung**

(57) Diese Erfindung betrifft thermoplastische Poly (urethan-harnstoffe) (TPU) mit inhärent bioziden Eigenschaften.

Die Erfindung umfasst ein Verfahren zur Herstellung von thermoplastischen Poly(urethanharnstoffen) mit bioziden Eigenschaften durch Umsetzung einer A-Komponente mit einer B-Komponente in Gegenwart von Zusatzstoffen, wobei die A-Komponente die Teilkomponenten
A1) eine oder mehrere langkettige Dihydroxylverbindungen wie Polyesterdiole, Polyetherdiole, Polytetrahydrofurane, Polycaprolactone, Polycarbonatdiole und/oder Poly-$\alpha$,$\omega$-dihydroxybutadiene,
A2) ein oder mehrere kurzkettige Diole wie Butan-1,4-diol, Hexan-1,6-diol, Ethylenglykol, Diethylenglykol,
A3) ein oder mehrere sekundäre Diamine, ggf. A4) ein oder mehrere Katalysatoren, und die B-Komponente die Teilkomponenten
B1) ein oder mehrere Diisocyanate oder
B2) Prepolymere auf der Basis von Diolen mit 0 bis 50 Gew.-% freien (monomeren) Diisocyanaten umfassen, das dadurch gekennzeichnet ist, dass die Umsetzung in Gegenwart einer weiteren Teilkomponente A5), enthaltend eine oder mehrere biozidwirksame Verbindungen mit mindestens einer-NH- oder-$NH_2$-Funktion im Molekül, durchgeführt wird und gleichzeitig oder anschließend eine Weiterverarbeitung der Poly(urethan-harnstoffe) erfolgt.

EP 2 524 934 A2

**Beschreibung**

Diese Erfindung betrifft neue thermoplastische Poly(urethan-harnstoffe) (TPU) mit inhärent bioziden Eigenschaften zur Herstellung dünnwandiger Gegenstände oder zur Beschichtung von elastischen Formkörpern zur Verwendung in der Elektrotechnik, im Automobilbau, in Bergwerken oder im Bauwesen.

Die Herstellung thermoplastischer Poly(urethan-harnstoffe) (TPU) ist seit 1937 bekannt. Thermoplastische Poly(urethan-harnstoffe) können auf der Basis von Polyesterdiolen oder Polyetherdiolen unter Verwendung von Kettenverlängerern und Diisocyanaten hergestellt werden. Durch die Art der Reaktionspartner und ihr Verhältnis zueinander werden die Eigenschaften der TPU gesteuert.

Die Art der Kettenverlängerer bestimmt die Härte und die elastischen Eigenschaften der TPU. So werden hauptsächlich kurzkettige Diole wie Butan-1,4-diol oder Hexan-1,6-diol eingesetzt, es können aber auch Diamine oder Wasser verwendet werden. Geeignete Diamine waren lange Zeit 4,4'-Diphenylmethandiamin oder Methylen-bis-(3-chlor-4-phenyl-amin) (MOCA). Weiterhin wurden N,N'-substituierte Toluylendiamine oder Xylylendiamine verwendet.

Methoden zur Herstellung antimikrobiell ausgerüsteter Polymere sind ebenfalls bekannt. Dazu werden die Biozide auf die Oberfläche des Polymeren in Form einer Oberflächenschicht aufgebracht oder in das Polymere eingearbeitet. Dazu sind folgende Verfahren beschrieben worden:

(a) Adsorption auf der Polymeroberfläche direkt oder über oberflächenaktive Stoffe, siehe z. B. EP 0 550 875,

(b) Einarbeitung des Biozids in ein Beschichtungssystem, das auf die Oberfläche des Polymeren aufgebracht wird,

(c) Einarbeitung des Biozids in die Masse des Polymeren als Additiv, siehe z. B. WO 03/009879 A1 oder USP 5,906,825,

(d) Anbindung der Biozidmoleküle über chemische Bindungen an oder in Seitenketten der Polymere (ein Übersichtsartikel findet sich z. B. bei: M. Charnley, M. Textor, C. Acikgoz, Designed polymer structures with antifouling-antimicrobial properties, Reactive & Functional Polymers 71, 329-334 (2011) oder L. Timofeeva, N. Kleshcheva, Antimicrobial polymers, Appl. Microbiol. Biotechnol. 89 (2011), 475-92),

(e) Kovalente Bindung an die Polymeroberfläche, in der Regel mit beträchtlichem Aktivitätsverlust,

(f) Mischung von Komponenten zur Polymerbildung vor der Umsetzung mit Bioziden und Bildung des Polymeren, siehe z. B. EP 0 927 222.

Nach der DE 10 2007 006 761 A1 werden Formmassen mit an der Oberfläche hoher Anfangskonzentration an Wirkstoffen, z. B. in thermoplastischen Polyurethanen und Polyetherblockamide, mit teilneutralisierten Wirkstoffen hergestellt.

Nach der DE 10 2005 048 132 A1 werden antimikrobielle Kunststoffzusammensetzungen, insbesondere thermoplastische Elastomere (TPE), dadurch hergestellt, dass ein pulverisierter antimikrobieller Wirkstoff in Kombination mit einem pulverisierten Polymeren dem Basispolymeren während der Verarbeitung in der Schmelze zugesetzt werden, wodurch die Wirkstoffe über einen längeren Zeitraum freigesetzt werden.

Nach der DE 10 2005 048 131 A1 werden antimikrobielle Kunststoffzusammensetzungen mit niedriger Elutionsrate und langer Wirksamkeit auf der Basis von TPE und dem Zusatz von Bis-(4-amino-1-pyridinium)alkanen zur Verfügung gestellt.

Die DE 10 2005 034 493 A1 lehrt die Herstellung von oberflächenbeschichteten Artikeln durch Beschichtung mit filmbildenden Bindemittelsystemen, die wenigstens ein vernetzbares Polymer und einen Vernetzer sowie einen Katalysator und einen Füllstoff enthalten, die als kugelförmige Teilchen in Wasser dispergiert sind.

In der DE 26 54 014 werden biozide Massen beschrieben, die aus einer homogenen Mischung eines Biozids in einem festen thermoplastischen Harz mit einer um den Faktor 20 größeren Biozidkonzentration als der normalen Anwendungskonzentration entspricht.

In der US-OS 2011/0011613 A1 werden beschichtete elektrische Leitungen mit Schutzmantel beschrieben, der eine antimikrobielle oder fungizide Wirkung aufweist. Der Schutzmantel besteht aus einem Metallrohr, das flexibel sein kann, auf das eine erste Polymer-Schicht aufgebracht wird, auf die wiederum eine zweite Polymerschicht extrudiert wird. Beide Polymerschichten können dabei durch Zugabe geeigneter Additive bakterizid oder fungizid eingestellt werden. Beide Schichten können darüber hinaus durch Pigmente eingefärbt sein.

Dagegen ist die Möglichkeit, biozide Eigenschaften durch einen geeigneten Aufbau des Polymeren insgesamt zu erzielen (wie Punkt d), bisher wenig beachtet worden. So werden in der WO 2009/148880 A2 antimikrobiell wirksame Polymere beschrieben, bei denen die antimikrobiellen Struktureinheiten kovalent an das Polymerkettenende oder an

ein Polymerseitenkettenende gebunden sind, wobei diese zusätzlich noch oberflächenaktive Gruppierungen aufweisen können, so dass eine Anreicherung der antimikrobiell aktiven Endgruppen an der Oberfläche des Polymeren erfolgt. Diese Materialien sollen vorzugsweise in der Medizintechnik und als biozide Beschichtungen eingesetzt werden. Nach der Lehre der WO 2009/102795 A1 werden Monomere oder Polymere mit kovalent gebundenen aktiven Bestandteilen über ein ringöffnendes cyclisches Monomer über eine abbaubare chemische Bindung gebunden. Nach der Lehre der US-PS 6,939,554 B2 können an Polyamide mit an Seitenketten verfügbaren Polyamingruppen über Phosphine biozidwirksame Verbindungen gebunden werden. Die nach diesen Verfahren hergestellten Polymere sollen in erster Linie biozid sein, während die weiteren Eigenschaften - insbesondere mechanische und/oder thermo-mechanische - nicht weiter berücksichtigt oder beschrieben wurden.

Allen oben dargestellten Verfahren ist gemeinsam, dass die Ausrüstung der Formteile oder Formmassen mit einem biozid wirksamen Mittel einen zusätzlichen Arbeitsschritt beinhaltet, d. h. entweder wird einer der Ausgangsstoffe mit diesem Mittel behandelt oder eines der Polymere wird damit versetzt oder es ist eine Nachbehandlung einschließlich einer Beschichtung erforderlich.

In den verschiedensten Bereichen des Lebens besteht ein Bedarf, auf Oberflächen die Besiedlung mit Mikroorganismen und die Bildung von Biofilmen zu verhindern. Der Schutz der Materialien vor der Ausbildung von Biofilmen bzw. der Anhaftung von Organismen soll möglichst lange Zeiträume umfassen und insbesondere bei langlebigen Anlagen der Industrie Zeiträume von über 20 Jahren umfassen. Mit den bisherigen Methoden und Techniken der Addition von biozidwirksamen Verbindungen in die Materialien oder spezielle Oberflächenbeschichtungen lässt sich diese Forderung nicht erfüllen. Die chemische Verankerung von Biozidmolekülen über kovalente Bindungen an oder in Seitenketten von Polymeren hat bisher oftmals zu einer wesentlichen Reduktion der bioziden Eigenschaften und damit der Wirksamkeit der Materialien in Bezug auf die Beständigkeit gegenüber dem Einfluss von Mikroorganismen aus der Umwelt geführt. Es besteht folglich ein Bedarf nach Polymeren, speziell thermoplastischen Polymeren - d. h. solchen, die sich mittels nach dem Stand der Technik bekannter Verfahren auf Thermoplastverarbeitungsmaschinen verarbeiten lassen - mit einem hohen - auch mechanischen und thermo-mechanischen - Eigenschaftsniveau, das sich über die Gebrauchsdauer in seinen Eigenschaften nicht verändert und insbesondere seine biozide Wirkung behält.

Das erfindungsgemäße Verfahren in Verbindung mit den erfindungsgemäßen Produkten bietet nun eine neue, dauerhafte Lösung dieses Problems.

Aufgabe der Erfindung ist es, ein Verfahren zur Herstellung thermoplastischer Poly(urethanharnstoffe) und Formkörper und Verbundkörper daraus mit dauerhaft inhärent bioziden Eigenschaften zur Verfügung zu stellen.

Erfindungsgemäß wird die Aufgabe mit einem Verfahren zur Herstellung von thermoplastischen Poly(urethanharnstoffen) mit bioziden Eigenschaften durch Umsetzung einer A-Komponente mit einer B-Komponente in Gegenwart von Zusatzstoffen gelöst, wobei die A-Komponente die Teilkomponenten

A1) eine oder mehrere langkettige Dihydroxylverbindungen wie Polyesterdiole, Polyetherdiole, Polytetrahydrofurane, Polycaprolactone, Polycarbonatdiole und/oder Poly-$\alpha$,$\omega$-dihydroxybutadiene,

A2) ein oder mehrere kurzkettige Diole wie Butan-1,4-diol, Hexan-1,6-diol, Ethylenglykol, Diethylenglykol,

A3) ein oder mehrere sekundäre Diamine,
ggf. A4) ein oder mehrere Katalysatoren,
und die B-Komponente die Teilkomponenten

B1) ein oder mehrere Diisocyanate
oder

B2) Prepolymere auf der Basis von Diolen mit 0 bis 50 Gew.-% freien (monomeren) Diisocyanaten
umfassen,
das dadurch gekennzeichnet ist, dass die Umsetzung in Gegenwart einer weiteren Teilkomponente A5), enthaltend eine oder mehrere biozidwirksame Verbindungen mit mindestens einer -NH- oder $-NH_2$-Funktion im Molekül,
durchgeführt wird und gleichzeitig oder anschließend eine Weiterverarbeitung der Poly(urethan-harnstoffe) erfolgt.

Darüber hinaus wird die Aufgabe erfindungsgemäß mit Poly(urethan-harnstoffen) und Formkörpern und Verbundkörpern daraus gelöst, die nach dem erfindungsgemäßen Verfahren herstellbar sind und die dauerhaft inhärent biozide Eigenschaften aufweisen.

Vorteilhafte Weiterbildungen sind in den Unteransprüchen angegeben.

So ist das Verfahren dadurch gekennzeichnet, dass die Umsetzung mit
einem Hydroxyläquivalent einer oder mehrerer langkettigen Dihydroxylverbindungen wie Polyesterdiolen, Polyetherdiolen, Polytetrahydrofuranen, Polycaprolactonen, Polycarbonatdiolen und/oder Poly-α,ω-dihydroxy-butadienen (A1), einem bis acht Hydroxyläquivalente eines oder mehrerer kurzkettiger Diolen wie Butan-1,4-diol, Hexan-1,6-diol, Ethylenglykol, Diethylenglykol (A2),
0,1 bis acht Aminäquivalente eines oder mehrerer sekundärer Diamine (A3),
ggf. 0,01 bis 1 Gew.-% bezogen auf die Komponente A1 eines oder mehrerer Katalysatoren (A4),
0,001 bis vier Aminäquivalente einer oder mehrerer biozidwirksamer Verbindungen mit mindestens einer -NH- oder -$NH_2$-Funktion im Molekül (A5)
durchgeführt wird.

Die Umsetzung mit einer weiteren Teilkomponente A6, die ein oder mehrere Zusatzstoffe enthält wie Flammschutzmittel, Pigmente, Farbstoffe, Mittel zur Verbesserung der thermischen Leitfähigkeit und Mittel zur Einstellung der elektrischen Leitfähigkeit, wird in einer Menge von 0,01 bis 25 Gew.-% durchgeführt.

Eine Weiterbildung ist dadurch gekennzeichnet, dass das NH-Äquivalentverhältnis der sekundären Diamine A3 zu den Biozidmolekülen A5 wie (95 bis 3) : (5 : 97) beträgt.

Insbesondere beträgt das NH-Äquivalentverhältnis der sekundären Diamine A3 zu den Biozidmolekülen A5 wie (95 bis 55) : (5 : 55).

Die Umsetzung erfolgt in einem Reaktionsextruder ggf. mit nachfolgender Granulierung, wobei der Extruder in einer Weiterbildung als Doppel-Reaktionsextruder ausgebildet ist.

Eine Weiterbildung ist dadurch gekennzeichnet, dass die Teilkomponenten A1, A2, A3, A4, A5 und ggf. A6 in den vorherbestimmten Mengen zu einer Komponente A vorgemischt und mit der Komponente B bei einer Temperatur von 80 bis 200°C in einem Reaktionsextruder zur Umsetzung gebracht werden.

Nach der Umsetzung im Reaktionsextruder wird das Reaktionsprodukt in Form von 1 bis 10 mm starken Drähten ausgebracht, die ggf. nach Abkühlung durch ein Schneidwerk zu Granulaten von 1 bis 10 mm Länge verarbeitet werden.

Eine Weiterbildung der Erfindung ist dadurch gekennzeichnet, dass die Komponente A und die Komponente B in einer Zone eines Reaktionsextruders miteinander vermischt und in einem Zwei-Phasen-Werkzeug auf ein weiteres, simultan extrudiertes thermoplastisches Material in einer Schichtstärke von 1 μm bis 10 mm aufgetragen und dieses Verbundmaterial anschließend auf Umgebungstemperatur gekühlt wird.

In einer Weiterbildung werden die Komponente A und die Komponente B in einer Zone eines Reaktionsextruders miteinander vermischt und in einem Zwei-Phasen-Werkzeug auf ein metallisches Rohr oder einen flexiblen metallischen Schlauch oder einen flexiblen Segmentschlauch in einer Schichtstärke von 1 μm bis 10 mm aufgetragen und dieses Verbundmaterial anschließend auf Umgebungstemperatur gekühlt, ggf. werden die Komponente A und die Komponente B in einer Zone eines Reaktionsextruders miteinander vermischt und in einem Zwei-Phasen-Werkzeug auf ein weiteres, simultan extrudiertes thermoplastisches Material von einer Schichtstärke von 0,1 bis 10 mm in einer Schichtstärke von 1 μm bis 10 mm aufgetragen und dieser Verbund auf ein metallisches Rohr oder einen flexiblen metallischen Schlauch oder einen flexiblen Segmentschlauch in einer Schichtstärke von 0,1 mm bis 10 mm aufgetragen und dieser Verbund anschließend auf Umgebungstemperatur gekühlt.

Eine Weiterbildung ist dadurch gekennzeichnet, dass die Komponente A und die Komponente B in einer Zone eines Tripel-Reaktionsextruders miteinander vermischt werden, in einem Drei-Phasen-Werkzeug ein zu einem Schrumpfschlauch geeignetes Gemisch aus EPDM, Silan und Katalysator zu einem 10 bis 90 mm starken Schlauch mit einer Wandstärke von 1 bis 20 mm extrudiert, in diesen Schlauch aus im Werkzeug befindlichen Düsen ein EVA-Klebstoff mit einer Schichtstärke von 10 bis 500 μm aufgebracht, die erfindungsgemäßen Komponenten A und B über einen Mischkopf in Düsen gegeben, durch die auf der Außenseite des Schlauches simultan ein thermoplastisches Material von einer Schichtstärke von 0,1 bis 10 mm aufgetragen und dieser Verbund ggf. nach einer Wärmebehandlung und einer Expansion mit Druckluft ggf. in einer Wärmevorrichtung, z. B. einem auf 50 bis 150 °C temperierten Bad, unterworfen, anschließend auf Umgebungstemperatur gekühlt wird, so dass ein gegen den Angriff von Mikroorganismen geschützter Schrumpfschlauch hergestellt wird.

Überraschend wurde gefunden, dass der Einbau von bestimmten sekundären Diaminen (A3) in Kombination mit biozidwirksamen Verbindungen mit mindestens einer -NH- oder -$NH_2$-Funktion im Molekül (A5) zusätzlich zu den Kettenverlängererdiolen (A2) in bestimmtem Maße zu einer gegenüber dem monomeren Biozidmolekül mindestens gleich hohen bioziden Wirksamkeit führt und diese Wirkung mindestens fünf Jahre stabil bestehen bleibt, so dass sich während dieser Zeit kein Biofilm ausbilden kann. Besonders überraschend war das Ergebnis, dass bestimmte Biozidverbindungen ihre biozide Wirkung auch dann behalten, wenn sie in eine Polymerhauptkette eingebunden werden. Dabei ist eine Voraussetzung für dieses Verhalten und damit für die erfindungsgemäßen Produkte, dass zusätzlich zu dem Diol-Kettenverlängerer (A2) immer ein Diamin als Kettenverlängerer (A3) und eine biozidwirksame Verbindung (A5) mit mindestens einer -NH- oder -$NH_2$-Funktion im Molekül eingesetzt werden und diese in die Polymerhauptkette eingebaut werden. Das Verhältnis der beiden Amine zueinander soll dabei betragen von Diamin-Kettenverlängerer-NH (A3) zu biozidwirksamem Molekül-NH (A5) wie 99 : 1 bis 1 : 1, bevorzugt 90 : 10 bis 67 : 33.

Vorteilhafterweise werden die biozidwirksamen Verbindungen mit mindestens einer -NH- oder -$NH_2$-Funktion im Molekül (A5) in der Regel in der Diol-Kettenverlängerer-Komponente (A2) gelöst und mit der Diamin-Kettenverlängerer-Komponente (A3) vermischt und dieses ternäre Gemisch als Kettenverlängerer-Komponente entweder für sich oder in Mischung der Dihydroxylverbindung (A1) unter Zusatz von Katalysator(en) (A4) und ggf. weiteren Additiven (A6) zu einer A-Komponente verarbeitet, die dann jeweils mit der B-Komponente, dem Diisocyanat (B1) bzw. dem Prepolymeren (B2), umgesetzt werden.

Demzufolge gibt es mehrere Verfahrensvarianten in Bezug auf das Mischungsverfahren zur Herstellung der erfindungsgemäßen bioziden TPU.

Insbesondere werden erfindungsgemäße thermoplastische Polyurethane bzw. Poly(urethanharnstoffe) erhalten, wenn das Äquivalent-Verhältnis der Komponenten 2 : 3 : 4 sich wie (90 bis 5) : (5 bis 50) : (0,1 bis 10) beträgt. Im Falle bestimmter langkettiger Polyetherdiole, z. B. bei Molmassen über 2000, kann ganz auf die Diol-Kettenverlängerer verzichtet werden und die Kettenverlängerung ausschließlich über die sekundären Diamine (3) und die Biozidmoleküle (4) erfolgen; in diesem Falle wird ein Äquivalent-Verhältnis von 3 : 4 wie (95 bis 3) : (5 : 97) angewandt, wobei ein Äquivalent-Verhältnis von 3 : 4 wie (95 bis 55) : (5 : 55) bevorzugt wird.

Geeignete biozidwirksame Verbindungen sind z. B. das als Irgarol® 1051 bezeichnete 2-Methylthio-4-*tert*-butylamino- 6-cyclopropyl-amino-s-triazin mit der Strukturformel

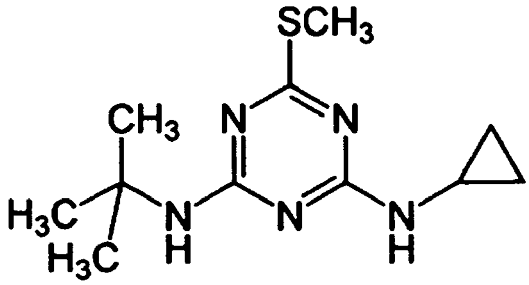

Dieses regiert über die beiden NH-Gruppen mit Di- und/oder Polyisocyanaten bzw. mit Vorpolymerisaten (Prepolymeren) auf deren Basis und bildet in Abhängigkeit von der Struktur der Isocyanatkomponente und der Polyolkomponente elastische, halbharte oder harte Poly(urethan-harnstoffe), die durch den Einbau der Verbindung durchgängig biozid gegenüber Algen, Bakterien und Mikropilzen (Fungi) sind.

Das 2-Methylthio-4-*tert*-butylamino-6-cyclopropylamino-*s*-triazin ist nur ein Beispiel für ein biozidwirksames Molekül, das außer über eine biozide Wirkung zu verfügen auch ein hochwirksamer Baustein im Polyadditionsverfahren mit Di- und/oder Polyisocyanaten ist. Weitere geeignete biozidwirksame, isocyanatreaktive Verbindungen sind z. B. 2-(Thiazol-4-yl)-1H-benzimidazol, Trichlormethylthiophthalimid oder Tetrachlorphthalimid, 4,4-Dimethyloxazolidin, Bis-(3-aminopropyl)octyl-amin, N-(3-Aminopropyl)-N-dodecylpropan-1,3-diamin oder ähnliche Verbindungen. Weitere geeignete Biozide sind polymere, biozidwirkame Stoffe, z. B. polymeres N-Methylmethanamin, Copolymere des N,N, N',N'-Tetramethylendiamins und des Bis-(2-chlorethylethers), Poly(hexamethylendiaminguanidine), Polyhexamethylenbiguanide usw.

Geeignete langkettige Diole sind z. B. Polyetheralkohole mit OH-Funktionalität 2 und Molmassen von 600 bis 8000, Polyesteralkohole der Funktionalität 2 und Molmassen von 500 bis 3000, Polycaprolactonpolyole mit Molmassen von 500 bis 8000, Polytetrahydrofurane mit Molmassen von 650 bis 6000. Die Herstellung dieser Produkte ist bekannt, es handelt sich im Wesentlichen um technisch verfügbare Produkte. Beispielhaft seien das unter dem Namen Lupranol® 1000 von der BASF AG vertriebene Polypropylenglykol 2000 oder die von der Lyondell Corp. vertriebenen Polyetherdiole auf Basis Propylenoxid und Ethylenoxid mit statistisch oder als Block vorliegendem Ethylenoxid mit Molmassen von 400 bis 4000 genannt. Als Polyesterdiole kommen ebenso die von der BASF AG unter dem Handelsnamen Lupraphen® auf Basis von Adipinsäure und verschiedenen Diolen hergestellten Produkte in Frage. Weiterhin seien beispielhaft die PTMO genannt, die unter den Handelsnamen Polymeg® mit Molmassen von 650 bis 4000 vertrieben werden.

Für die zur Herstellung der erfindungsgemäßen bioziden TPU geeignete Diisocyanate sind z. B. aliphatische, aromatische, araliphatische oder cycloaliphatischen Diisocyanate, z. B. Hexan-1,6-diisocyanat, Isophorondiisocyanat, 4,4'-Dicyclohexylmethandiisocyanat oder 1,4-Cyclohexandiisocyanat, Xylylendiisocanat, 4,4'-Diphenylmethandiisocyanat, 2,2'- Diphenylmethandiisocyanat, 2,4'- Diphenylmethandiisocyanat, 2,4-Toluylendiisocyanat, 2,6- Toluylendiisocyanat oder Gemische davon. Weiterhin können sog. Prepolymere auf der Basis dieser Diisocyanate mit Diolen, Diaminen und/oder Dithiolen eingesetzt werden.

Durch den Aufbau von Isocyanat-Prepolymeren mit einer Isocyanat-Funktionalität von 2 auf der Basis ausgewählter Kettenverlängerer (A1), die Diamine und/oder biozide Verbindungen mit einer oder zwei Aminfunktionen einschließen, kann bei Umsetzung mit den weiteren Verbindungen ein Polyadditionsprodukt mit sehr guten mechanischen Eigenschaften erhalten werden. Die mechanischen, elastischen und thermomechanischen Eigenschaften des Polyadditionsprodukts werden durch den Aufbau über das Verhältnis der Teilkomponenten A1, A2, A3 und A5 sowie die Struktur

des Isocyanat-Prepolymeren und in ihm durch das verwendete Polyol und/oder Polyamin sowie das stöchiometrische Verhältnis des Isocyanats zu den Hydroxyl- und/oder Aminogruppen bestimmt. Je höher die Molmasse des Polyols bzw. Polyetheramins oder Diamins im Isocyanat-Prepolymeren ist, desto elastischer wird das Polyadditionsprodukt.

Weiterhin können die Eigenschaften über das Isocyanat : (Hydroxyl/Aminogruppen)-Verhältnis gesteuert werden. Um ausreichend hohe Molmassen zu erzielen, ist eine möglichst stöchiometrische Umsetzung ohne Nebenreaktionen - Allophanate, Biurete, Isocyanurate - erforderlich. Der Ausschluss der Nebenreaktionen erfolgt über die Wahl der Katalysatoren, die Temperaturführung bei der Herstellung und die Struktur der aminischen Komponenten.

Geeignete sekundäre Diamine sind z. B. N,N'-substituierte Alkylendiamine oder cyclische Diamine sowie aromatische Diamine. Beispielhaft seien genannt N,N'-Bis-(N-ethylaminopropyl)piperazin, N,N'-Bis-(N-methylamino-propyl) piperazin, N,N'-Bis-(N-propylaminopropyl)piperazin, N,N'-Dibutylethylendiamin, N,N',N''-Trimethyldiethylentriamin, N, N',N''-Trimethyldipropylentriamin, N,N',N''-Triethyldipropylentriamin, N,N',N''-Tripropylyldipropylentriamin, Piperazin, Bis-(N-ethylaminoethyl)piperazin, N,N'-Diethyldicyclohexylmethan-4,4'-diamin, Bis-(N-ethylamino-propyl)ether, Bis-(N-ethylaminohexyl)ether, 4,4'-Bis(sec.-butylamino)dicyclohexylmethan, 1,4-Bis-(sec.-butylamino)cyclohexan, N,N'-Diethyl-isophorondiamin, N,N'-Di-isopropylisophorondiamin, N,N'-Diethyl-2,4-toluylendiamin, N,N'-Diethyl-2,6-toluylendiamin, N,N'-Dialkylamino-diphenylmethan, Diethylenglykol-bis(p-[N-alkyl]aminobenzoat, N,N'-Diethylbiguanid usw. oder Gemische davon.

Weiterhin sind geeignete sekundäre Diamine α,ω-Diaminopolyether der Molmasse 200 bis 4000, z. B. Jeffamine® SD-231, SD-401, SD-2001 mit Molmassen von 315, 515 bzw. 2050 (Huntsman Corp.), zum Einbau in die Prepolymeren auch primäre α,ω-Diaminopolyether der Molmasse 230 bis 4000, z. B. Jeffamine® D-230, D-400, D-2000 oder D-4000 mit Molmassen von 230, 430, 2000 bzw. 4000 auf Basis von Polypropylenoxiden oder ED-600, ED-900 oder DE-2003 mit Molmassen von 220, 600 bzw. 900 auf der Basis von Polyoxyethylenen.

Geeignete Katalysatoren aus der Gruppe der tertiären Amine sind z. B. Triethylendiamin, Bis-(2,2'-dimethylamino)ethylether, Triethylamin, N-Methylmorpholin, N,N-Diethylpiperazin, N,N-Dimethyl-benzylamin, N,N,N',N'-Tetramethylbutandiamin, Pentamethylpropylemtriamin, Pyridinoxid, Tetramethylguanidin, Gemische davon und weitere, in der Polyurethanchemie bekannte Katalysatoren.

Geeignete Katalysatoren aus der Gruppe der metallorganischen Verbindungen sind z. B. zinn-, blei-, wismut- oder kupferorganische Verbindungen wie Dialkylsalze von Carbonsäuren, z. B. Dibutylzinndiacetat, Dibutylzinndilaurat, Dibutylzinn-C12- bis C14-carboxylat, Zinndioctoat, Zinndioleat, Dibutylzinn-bis-(4-methylaminobenzoat), Dibutylzinn-bis-(2-ethylhexylthioglykolsäure-ester), Dibutylzinndilaurylmercaptid, Bis-(tributylzinn)oxid usw.

Geeignete Zusatzstoffe (Teilkomponente A6) sind z. B. Aluminiumoxid, Aluminiumhydroxid, Aluminiumoxidhydroxid (Böhmit), Aluminiumoxidhydrat, Magnesiumoxid, Magnesiumhydroxid, Montmorrilonit, Laponit, Kreide, Bariumsulfat, Siliziumdioxid, pyrogene Kieselsäure, deren Teilchengröße zwischen 1 nm und 100 μm liegen kann, Bleidioxid, Bleichromat, Bleicarbonat, Calciumstearat, Bariumstearat usw.

Geeignete Pigmente und Farbstoffe sind die üblicherweise zum Einfärben von Kunststoffen verwendeten, z. B. Titandioxid, Eisenoxide, Mangandioxid, Roterde, Zinkoxid, Monopolbrillantblau, Monopolbrillantrot etc.

Geeignete Flammschutzmittel sind z. B. Aluminiumoxid, Aluminiumhydroxid, Aluminiumoxidhydroxid (Böhmit), Aluminiumoxidhydrat, Magnesiumoxid, Magnesiumhydroxid, Melamin, Melamincyanurat, Melaminpolyphosphat, Tris-(dichlorpropyl)phosphat, Tris(chlorethyl)phosphat, Phosphinsäureester, Octabrombiphenyl, Hexabromdiphenylether, chlorierte Paraffine, Ammoniumpolyphosphat, roter Phosphor etc. einschließlich Gemischen davon.

Geeignete anorganische Stoffe zur Steuerung der Wärme- oder elektrischen Leitfähigkeit sind z. B. Siliciumcarbid, Graphit, Graphen, Kohlenstoffnanoröhrchen (carbon nano tubes), modifizierte Graphite und oberflächenmodifizierte Graphene.

Weiterhin können als Zusatzstoffe im Falle der Verwendung von Polyesterdiolen Feuchtigkeitsstabilisatoren verwendet werden, z. B. Carbodiimide oder Orthoameisensäureester oder Protonenfänger. Letztere werden vorzugsweise als nanoskalige Partikel eingesetzt, z. B. Erdalkalimetallcarbonate oder -hydroxide oder -hydrogencarbonate.

Die Verhältnisse der Teilkomponenten A1 bis A3 sowie A5 können in weiten Grenzen variiert werden, um geeignete mechanische Eigenschaften der erfindungsgemäßen Poly(urethanharnstoffe) (TPU) einzustellen. Typische Grenzen zur Herstellung der bioziden thermoplastischen Poly(urethan-harnstoffe) sind

A1) ein Hydroxyläquivalent einer oder mehrerer langkettigen Dihydroxylverbindungen wie Polyesterdiolen, Polyetherdiolen, Polytetrahydrofuranen, Polycaprolactonen, Polycarbonatdiolen und/oder Poly-α,ω-dihydroxy-butadienen,

A2) ein bis acht Hydroxyläquivalente eines oder mehrerer kurzkettiger Diolen, z. B. Butan-1,4-diol, Hexan-1,6-diol, Ethylenglykol, Diethylenglykol usw.,

A3) 0,1 bis acht Aminäquivalente eines oder mehrerer sekundärer Diamine,

A4) ggf. 0,01 bis 1 Gew.-% bezogen auf die Teilkomponente (A1) eines oder mehrerer Katalysatoren,

A5) 0,001 bis vier Aminäquivalente einer oder mehrerer biozidwirksamer Verbindungen mit mindestens einer -NH- oder -$NH_2$-Funktion im Molekül,

A6) ggf. 0,01 bis 25 Gew.-% eines oder mehrerer Zusatzstoffen wie Flammschutzmittel, Pigmente, Farbstoffe, Mittel zur Verbesserung der thermischen Leitfähigkeit, Mittel zur Einstellung der elektrischen Leitfähigkeit usw.

durch Vermischen mit einem oder mehreren Diisocyanaten (B1) oder Prepolymeren (B2) auf der Basis von Diolen und oder Diaminen mit 0 bis 50 Gew.-% freien (monomeren) Diisocyanaten zur Umsetzung ggf. unter Formgebung hergestellt werden, wobei der Isocyanatindex zwischen 90 und 115 liegt. Der Isocyanatindex ist definiert als das Verhältnis der Isocyanatgruppen zu den Hydroxyl-/Amingruppen multipliziert mit 100 gemäß

$$\text{Isocyanatindex} = \frac{\Sigma\ \text{Isocyanatgruppen x 100}}{\Sigma\ \text{Hydroxyl-/Amingruppen}}.$$

Die Herstellung der erfindungsgemäßen bioziden TPU kann durch manuelles Vermischen der Komponenten, wobei die Teilkomponenten A1 bis A6 zu einer Vormischung (Systemkomponente A) verarbeitet werden und diese mit dem Diisocyanat (B1, B2) zur Reaktion gebracht wird, erfolgen. Weiterhin ist die Verwendung von Zwei- bis Sechs-Komponenten-Mischmaschinen möglich, bei denen entweder vorgemischte Komponenten oder die Einzelkomponenten über die Vermischung mit einem Mischkopf zur Umsetzung gebracht werden.

Bevorzugt wird die Herstellung der erfindungsgemäßen bioziden TPU durch Reaktionsextrusion in einem Reaktionsextruder, in den die vorgemischten Teilkomponenten A1 bis A6 sowie das Diisocyanat (B1) bzw. Prepolymer (B2) eingetragen und zur Reaktion gebracht werden.

Das Extrudat kann in Form eines Drahtes, von Mehrfachdrähten mit Durchmessern von 1 bis z. B. 10 mm, in Form von Profilen oder Schläuchen hergestellt werden. Die Reaktionstemperatur im Reaktionsextruder kann dabei 60 bis 200°C betragen, wobei Reaktionstemperaturen von 100 bis 180°C bevorzugt werden.

Bei Herstellung von Einzel- oder Mehrfachdrähten kann anschließend eine Granulierung durch übliche Granulierverfahren (Abschlagen der Drähte mit Messern) und Kühlung in Luft oder in Wasserbädern mit anschließender Trocknung erfolgen. Mit den Granulaten werden Halbzeuge zur weiteren Verarbeitung der erfindungsgemäßen bioziden TPU und zu deren Formgebung zur Verfügung gestellt.

Die Granulate können in weiteren Verfahrensschritten erfindungsgemäß zu Formkörpern mittels Extrusion oder Spritzguss verarbeitet werden. Im Falle der Extrusion können sie durch Mehrschichtenextrusion auf andere Materialien, vorzugsweise Polymere, aufgetragen werden. Die Schichten der erfindungsgemäßen bioziden TPU können dabei zwischen 10 mm und 1 μm liegen. Auf diese Weise können in einem Schritt Mehrschichtprofile einschließlich Schläuche mit einer außen und/oder innen liegenden biozid wirkenden Oberfläche hergestellt werden.

So werden in einer Ausführungsform des erfindungsgemäßen Verfahrens zur Herstellung der erfindungsgemäßen bioziden TPU die Teilkomponenten

A1 langkettige Dihydroxylverbindung

A2 kurzkettige(s) Diol(e),

A3 sekundäre(s) Diamin(e),

ggf. A4 Katalysator(en),

A5 biozidwirksame Verbindung(en) und

ggf. A6 Zusatzstoff(e)

in den vorherbestimmten Mengen mittels Mischer, Schnellmischer oder Mischstation zu einer Systemkomponente A vorgemischt und mit einer Komponente B,

dem/den Diisocyanat(en), bei einer Temperatur von 80 bis 200°C in einem Reaktionsextruder zur Umsetzung gebracht und aus dem Reaktionsextruder in Form von 1 bis 10 mm starken Drähten ausgebracht, wobei diese Drähte nach Abkühlung durch ein Schneidwerk zu Granulaten von 1 bis 10 mm Länge verarbeitet werden.

In einer weiteren Ausführungsform des erfindungsgemäßen Verfahrens zur Herstellung der erfindungsgemäßen bioziden TPU werden die Komponente A und das/die Diisocyanat(e) in einer Zone eines Reaktionsextruders miteinander vermischt und in einem Zwei-Phasen-Werkzeug auf ein weiteres, simultan extrudiertes thermoplastisches Material in einer Schichtstärke von 1 μm bis 10 mm aufgetragen und dieses Verbundmaterial anschließend auf Umgebungstemperatur gekühlt.

In einer weiteren Ausführungsform des erfindungsgemäßen Verfahrens zur Herstellung der erfindungsgemäßen bioziden TPU werden die Komponente A und das/die Diisocyanat(e) in einer Zone eines Reaktionsextruders miteinander vermischt und in einem Zwei-Phasen-Werkzeug auf ein metallisches Rohr oder einen flexiblen metallischen Schlauch oder einen flexiblen Segmentschlauch in einer Schichtstärke von 1 μm bis 10 mm aufgetragen und dieses Verbundmaterial anschließend auf Umgebungstemperatur gekühlt.

In einer weiteren Ausführungsform des erfindungsgemäßen Verfahrens zur Herstellung der erfindungsgemäßen bioziden TPU werden die Komponente A und das/die Diisocyanat(e) in einer Zone eines Reaktionsextruders miteinander vermischt und in einem Zwei-Phasen-Werkzeug auf ein weiteres, simultan extrudiertes thermoplastisches Material von einer Schichtstärke von 0,1 bis 10 mm in einer Schichtstärke von 1 μm bis 10 mm aufgetragen und dieser Verbund auf ein metallisches Rohr oder einen flexiblen metallischen Schlauch oder einen flexiblen Segmentschlauch in einer Schichtstärke von 0,1 mm bis 10 mm aufgetragen und dieser Verbund anschließend auf Umgebungstemperatur gekühlt.

In einer weiteren Ausführungsform des erfindungsgemäßen Verfahrens zur Herstellung der erfindungsgemäßen bioziden TPU werden die Komponente A und das/die Diisocyanat(e) in einer Zone eines Tripel-Reaktionsextruders miteinander vermischt. In einem Drei-Phasen-Werkzeug wird ein zu einem Schrumpfschlauch geeignetes Gemisch aus EPDM, Silan und Katalysator zu einem 10 bis 90 mm starken Schlauch mit einer Wandstärke von 1 bis 20 mm extrudiert. In diesen Schlauch wird aus im Werkzeug befindlichen Düsen ein EVA-Klebstoff mit einer Schichtstärke von 10 bis 500 μm aufgebracht. Die erfindungsgemäßen Komponenten werden über einen Mischkopf in Düsen gegeben, durch die auf der Außenseite des Schlauches simultan ein thermoplastisches Material von einer Schichtstärke von 0,1 bis 10 mm aufgetragen und dieser Verbund ggf. nach einer Wärmebehandlung und einer Expansion mit Druckluft ggf. in einer Wärmevorrichtung, z. B. einem auf 50 bis 150 °C temperierten Bad, unterworfen wird, anschließend auf Umgebungstemperatur gekühlt wird, so dass ein gegen den Angriff von Mikroorganismen geschützter Schrumpfschlauch hergestellt wird.

In weiteren Ausführungsformen können die erfindungsgemäßen bioziden Poly(urethan-harnstoffe) zu Lösungen verarbeitet werden, indem diese in einem geeigneten Lösungsmittel, z. B. Dimethylformamid, Dimethylacetamid, Cyclohexanon, Methylethylketon oder Dimethylsulfoxid, gelöst werden. Diese Lösungen können auf Formteile appliziert werden, wodurch nach Abdampfen des Lösungsmittels ein Film des erfindungsgemäßen bioziden Poly(urethan-harnstoffs) zurückbleibt, der den Formteilen biozide Eigenschaften auf ihrer Oberfläche verleiht. Die Lösungen können auch in Werkzeugen appliziert werden, so dass auf der Innenwand ein 1 bis 250 μm starker Film gebildet wird, auf den dann ein weiteres Material durch Spritzen oder Schäumen eingebracht und nach Härtung in der geschlossenen Form ein mit einer bioziden Oberfläche versehenes Formteil erzeugt wird.

In weiteren Ausführungsformen können die erfindungsgemäßen bioziden Poly(urethan-harnstoffe) zu Dispersionen verarbeitet werden, indem Lösungen der erfindungsgemäßen Produkte in ein Nicht-Lösungsmittel, z. B. einen Alkohol, einen Kohlenwasserstoff oder Wasser, unter schnellem Rühren eingetragen werden und das Lösungsmittel anschließend ganz oder teilweise entzogen wird. Die Dispersionen können ebenso wie die Lösungen zur Herstellung von Beschichtungen, Filmen oder zum In-Mould-Coating eingesetzt werden.

In weiteren Ausführungsformen können die erfindungsgemäßen bioziden Poly(urethan-harnstoffe) zu Filmen verarbeitet werden, indem die aufgeschmolzenen Produkte aus einem Extruder über eine Breitschlitz- oder Ringdüse ausgetragen werden. Die Filme können mit anderen Polymeren verschmolzen oder verbunden werden und so eine biozide Oberfläche dieser Polymeren oder Formkörper aus Polymeren oder Kompositen herstellen. Weiterhin können Filme in Werkzeugen der Kunststoffverarbeitung (Formen) eingelegt werden und dann mit anderen Polymeren oder Kompositen innig verbunden werden, z. B. in der Art und Weise des In-Mould-Coatings oder der Einlage in flächige oder Vieleck-Hohlkörper.

In weiteren Ausführungsformen können die erfindungsgemäßen bioziden Poly(urethan-harnstoffe) als Filme aus Lösungen oder Dispersionen erhalten werden. Während aus Lösungen in der Regel kompakte Filme ohne Poren erhalten werden, die als solche wie oben beschrieben eingesetzt werden können, können aus Dispersionen auch mikroporöse biozide Filme erhalten werden, die z. B. auch im Bereich von Arbeitsschutzmaterialien wie Handschuhen oder Schuhen mit biozider Ausrüstung eingesetzt werden können. Diese Filme können auf Extrudate appliziert und mit diesen verbunden werden oder an Stelle der auf die Oberfläche aufgetragenen Zwei-Komponenten-Systeme als vorgefertigter Film mit diesen verbunden werden.

Ausführungsbeispiele

Beispiel 1

Mehrere Teilkomponenten werden miteinander vermischt. Die Mischung wird aus 368 g Butan-1,4-diol (A2), 128 g 1,4-Bis-(N-ethylamino-propyl)piperazin (A3), 25,3 g 2-Methylthio-4-*tert*-butylamino-6-cyclopropyl-amino-*s*-triazin (A5) und 0,66 g Dibutylzinn-bis(2-ethylhexylthioglykolat) (A4) in einem 1,5 l-Schnellmischer innerhalb von 4 Stunden bei einer Temperatur von 55°C hergestellt.

Zur Herstellung einer A-Komponente werden diese vorgemischten Teilkomponenten bei 45°C mit 1000g eines Polyesterdiols (A1) auf der Basis von Adipinsäure, Diethylenglykol und Butan-1,4-diol innerhalb von 5 Stunden in einem Rührreaktor von 5 l Inhalt mit 150 $min^{-1}$ vermischt.

Die Komponente A wird bei 45°C mit 700g 4,4'-Diphenylmethandiisocyanat (Komponente B) innerhalb von 30s vermischt und das Gemisch auf ein PTFE-beschichtetes Blech ausgegossen. Das Reaktionsgemisch wird 5 Stunden bei 80°C getempert, abgekühlt und danach in einer gekühlten Schlagmühle zu einem 4 mm Granulat vermahlen.

Das Granulat wird in einem Doppelschneckenextruder bei 165°C mit einem Stahlwerkzeug von 8 mm Durchmesser der Düse mit zentralem Dorn von 4 mm zu einem 8 mm Schlauch extrudiert. Dieser Schlauch weist einen ersten Glasübergang bei -26°C (DSC), einen zweiten Glasübergang bei +77°C und einen dritten Glasübergang bei +136°C auf. Die Zugfestigkeit wurde mit 43 Mpa bei einer Bruchdehnung von 426% und einer Shore-A-Härte von 90 bestimmt. Die Immersion des Schlauches in ein Becken mit Grünalgen unter Umgebungsbedingungen (22 $\pm$ 4°C) zeigte nach 6 Monaten keinen Bewuchs.

Beispiel 2

Wie in Beispiel 1 werden die Teilkomponenten A2, A3, A4 und A5 miteinander vermischt.

In einem 100 l-Mischer mit Ankerrührer, Temperierung über ein Wasser-Glykol-Gemisch, Stickstoff-Schutzgas wird innerhalb von acht Stunden bei 55°C mit 125 $min^{-1}$ aus 36,8 kg Butan-1,4-diol, 12,0 kg 1,4-Bis-(N-methylamino-propyl)-piperazin, 2,55 kg 2-Methylthio-4-*tert*-butylamino- 6-cyclopropyl-amino-*s*-triazin und 0,06 kg Dibutylzinn-bis(2-ethylhexylthioglykolat) eine Mischung hergestellt.

Diese vorgemischten Teilkomponenten werden bei 45°C in einen 200 l-Reaktor mit gleicher Ausrüstung überführt, der 100 kg eines auf 50°C temperierten Polyesterdiols (A1) auf der Basis von Adipinsäure, Ethylenglykol und Butan-1,4-diol enthält, und 6 Stunden bei 120 $min^{-1}$ vermischt, wodurch 150 kg einer A-Komponente hergestellt werden.

Die Komponente A wird in den Vorratsbehälter von 200 l Inhalt eines Reaktionsextruders transferiert. Die B-Seite wird mit der Teilkomponente (B1) 4,4'-Diphenylmethansdiisocyanat befüllt und beide Komponenten auf 46°C temperiert. Über einen statischen Mischer werden die Komponenten in den Reaktionsextruder eingetragen und dort mit einer Verweilzeit von durchschnittlich 12s bei 175°C umgesetzt. Das Reaktionsgemisch wird auf ein Edelstahl-Transportband ausgetragen und in einer Nachreaktionszone bei 108°C 3,7 min getempert. Danach wird schockgekühlt und das Band von 5 bis 8 mm Stärke in einem Granulator zu 5 mm Granulat verarbeitet.

Das Granulat wird in einen Vorratsbehälter eines Doppelschneckenextruders gegeben, in den zweiten Vorratsbehälter wird EPDM mit der Korngröße 6 mm gefüllt. Zunächst wird das EPDM bei 170°C über einem Stahlwerkzeug von 14 mm Durchmesser der Düse mit zentralem Dorn von 9 mm zu einem 14 mm Schlauch extrudiert, auf den über eine Ringaufgabe das erfindungsgemäße Granulat derart zudosiert wird, dass auf dem EPDM-Schlauch eine Schicht des erfindungsgemäßen TPU von 150 $\mu$m gebildet wird. Die Zugfestigkeit des Verbundschlauches wurde mit 36 Mpa bei einer Bruchdehnung von 215% und einer Shore-A-Härte von 87 bestimmt. Die Immersion des Schlauches in ein Becken mit Grünalgen unter Umgebungsbedingungen (22 $\pm$ 4°C) zeigte nach 6 Monaten keinen Bewuchs auf der Außenseite, d. h. der mit dem erfindungsgemäßen TPU beschichteten Seite, jedoch einen starken Bewuchs im Inneren, der zu einem fast vollständigen Verschluss des Schlauches geführt hat.

Beispiel 3

Wie in Beispiel 1 werden die Teilkomponenten A2, A3, A4 und A5 miteinander vermischt.

In einem 100 l -Mischer mit Ankerrührer, Temperierung über ein Wasser-Glykol-Gemisch, Stickstoff-Schutzgas erfolgt die Herstellung der Mischung innerhalb von acht Stunden bei 55°C mit 125 $min^{-1}$ aus 13,0 kg Ethylenglykol, 12,0 kg 1,4-Bis-(N-methylamino-butyl)-piperazin, 1,5 kg 2-Methylthio-4-*tert*-butylamino-6-cyclopropyl-amino-*s*-triazin und 0,05 kg Zinndioctoat.

Diese vorgemischten Teilkomponenten werden bei 45°C in einen 200 l-Reaktor mit gleicher Ausrüstung überführt, der 100 kg eines auf 50°C temperierten Polytetramethylenoxid-diols (A1) der Molmasse von 1000 enthält, und 6

Stunden bei 120 $min^{-1}$ vermischt, wodurch 120 kg einer Komponente A hergestellt werden.

Die Komponente A wird in den Vorratsbehälter von 200 l Inhalt eines Doppelextruders transferiert. Die B-Seite wird mit einem Prepolymeren (B2) auf der Basis von 4,4'-Diphenylmethan-diisocyanat und Tripropylenglykol mit einem Isocyanatgehalt von 20,4% befüllt und beide Komponenten auf 46°C temperiert. Über einen statischen Mischer werden die Komponenten in die äußere Ringdüse eingegeben, in die innere Düse wird ein PVB-Granulat bei 135°C zu einem 16 mm Schlauch geformt, auf den eine Schicht von 200 μm Stärke des Reaktionsgemisches auftragen wird. Der Zwei-Hüllen-Schlauch wird nach Verlassen des Extruders über eine Wärmekammer bei 85°C geführt und dort noch 20 s getempert.

Man erhält einen PVB-Schlauch mit einer Schicht des erfindungsgemäßen TPU von 200 μm. Die Zugfestigkeit des Verbundschlauches wurde mit 17 Mpa bei einer Bruchdehnung von 247% und einer Shore-A-Härte von 89 bestimmt. Die Immersion des Schlauches in ein Becken mit Grünalgen unter Umgebungsbedingungen (22 ± 4°C) zeigte nach 6 Monaten keinen Bewuchs auf der Außenseite, d. h. der mit dem erfindungsgemäßen TPU beschichteten Seite, jedoch einen starken Bewuchs im Inneren, der zu einem fast vollständigen Verschluss des Schlauches geführt hat.

Beispiel 4

Wie in Beispiel 1 werden die Teilkomponenten A2, A3, A4 und A5 miteinander vermischt.

In einem 100 l -Mischer mit Ankerrührer, Temperierung über ein Wasser-Glykol-Gemisch, Stickstoff-Schutzgas erfolgt die Herstellung der Mischung innerhalb von acht Stunden bei 55°C mit 125 $min^{-1}$ aus 42,0 kg Diethylenglykol, 20,0 kg 1,4-Bis-2,4-(N-ethylamino)-toluol, 1,86 kg Carbendazin®, 0,07 kg Zinndioctoat und 0,1 kg N,N'-Dimethylpiperazin.

Diese vorgemischten Teilkomponenten werden bei 45°C in einen 250 l-Reaktor mit gleicher Ausrüstung überführt, der 200 kg eines auf 50°C temperierten Polypropylenoxiddiols (A1) der Molmasse von 2000 enthält, und 6 Stunden bei 120 $min^{-1}$ vermischt, wodurch 260 kg einer A-Komponente hergestellt werden.

Die Komponente A wird in den Vorratsbehälter von 200 l Inhalt eines Tripelextruders transferiert. Die B-Seite wird mit einem Prepolymeren (B2) auf der Basis von 4,4'-Dicyclohexylmethan-diisocyanat und Tripropylenglykol mit einem Isocyanatgehalt von 20,6% befüllt und beide Komponenten A und B auf 46°C temperiert.

Der Extruder wird mit einem Gemisch aus EPDM, Silan und Katalysator als Hauptkomponente gefüllt. Das Werkzeug weist einen Innendurchmesser an der Düse von 32 mm auf, der Innendurchmesser wird über einen Dorn auf 23 mm eingestellt. Das Werkzeug weist innen und außen jeweils einen Düsenkranz auf. Über einen statischen Mischer werden die Komponenten in die äußere Ringdüsen eingegeben, in die innere Düse wird ein auf 85°C temperiertes, schmelzflüssiges EVA-Granulat gegeben. Bei 185°C wird das EPDM-Gemisch zu einem 32 mm Schlauch geformt, auf den eine Schicht von 100 μm Stärke des Reaktionsgemisches auftragen wird. Durch die inneren Ringdüsen wird eine innere Schicht von 40 μm des Klebstoffs aufgetragen. Der Drei-Schichten-Schlauch wird nach Verlassen des Extruders über eine Wärmekammer bei 85°C geführt und dort noch 20 s getempert. Nach einer Konditionierzeit von 24 Stunden wird der Schlauch in eine Expansionsvorrichtung eingeführt, auf 95°C temperiert und mit Druckluft von 3,8 bar auf einen Durchmesser von 55 mm expandiert und anschließend durch Wasserstrahlen schock-gekühlt. Der Schlauch wird auf Trommeln konfektioniert.

Man erhält einen expandierten EPDM-Schlauch mit einer äußeren Schicht des erfindungsgemäßen TPU von 60 μm. Die Zugfestigkeit des Verbundschlauches wurde mit 21 Mpa bei einer Bruchdehnung von 210% und einer Shore-A-Härte von 85 bestimmt. Die Immersion des expandierten Schlauches in ein Becken mit Grünalgen unter Umgebungsbedingungen (22 ± 4°C) zeigte nach 6 Monaten keinen Bewuchs auf der Außenseite, d. h. der mit dem erfindungsgemäßen TPU beschichteten Seite, jedoch einen starken Bewuchs im Inneren, der zu einem fast vollständigen Verschluss des Schlauches geführt hat.

Beispiel 5

Das Material von Beispiel 1 wird zu einer Lösung verarbeitet. Dazu werden in einem Reaktor von 10 l Inhalt, der mit Doppelmantel an eine Ölheizung angeschlossen und mit einem Propellerrührer ausgerüstet ist, 5,65 l Dimethylavetamid auf 150°C unter Rühren erwärmt und während des Erwärmungsvorganges mit Stickstoff gespült. Sobald die Temperatur erreicht ist, werden bei 400 $min^{-1}$ langsam 1,2 kg des Materials von Beispiel 1 eingetragen, so dass die Temperatur nicht unter 147°C sinkt. Dieser Prozess nimmt etwa eine Stunde in Anspruch. Anschließend wird noch eine Stunde bei 155°C gerührt und danach sehr langsam unter Rühren abgekühlt. Man erhält eine 21%ige Lösung des bioziden Poly(urethanharnstoffs) in dem Lösungsmittel.

20 g dieser Lösung werden in einem Matis® LabCoater® mittels Messerrakel auf ein Silikontrennpapier mit einer Schichtstärke von 300 μm aufgetragen und anschließend 2 Stunden bei 100°C getrocknet. Man erhält einen farblosen Film des TPU von 55 μm Stärke.

Beispiel 6

Das Material aus Beispiel 1 wird in einem Extruder mit 2 x 25 mm Schnecken und acht Heizzonen auf eine Temperatur von 186°C aufgeschmolzen. Die Schmelze wird einer Düse von 0,9 mm zugeführt, die in einen Reaktor von 20 l Inhalt führt, der mit 10 l Wasser gefüllt ist und dieses mittels eines Schnellrührers von 48.000 $min^{-1}$ gerührt wird. Durch die Düse wird ein feiner Strahl des aufgeschmolzenen bioziden Poly(urethan-harnstoffs) in das gerührte Wasser eingetragen, bis eine Konzentration von 15,75 % erreicht ist. Man erhält eine Mikrodispersion mit Teilchengrößen zwischen 2 und 46 μm.

20 g dieser Dispersion werden in einem Matis® LabCoater® mittels Messerrakel auf ein Silikontrennpapier mit einer Schichtstärke von 300 μm aufgetragen und anschließend 1 Stunde bei 100°C getrocknet. Man erhält einen farblosen Film des TPU von 45 μm Stärke.

**Patentansprüche**

1. Verfahren zur Herstellung von thermoplastischen Poly(urethan-harnstoffen) mit bioziden Eigenschaften durch Umsetzung einer A-Komponente mit einer B-Komponente in Gegenwart von Zusatzstoffen, wobei die A-Komponente die Teilkomponenten

   A1) eine oder mehrere langkettige Dihydroxylverbindungen wie Polyesterdiole, Polyetherdiole, Polytetrahydrofurane, Polycaprolactone, Polycarbonatdiole und/oder Poly-α,ω-dihydroxybutadiene,
   A2) ein oder mehrere kurzkettige Diole wie Butan-1,4-diol, Hexan-1,6-diol, Ethylenglykol, Diethylenglykol,
   A3) ein oder mehrere sekundäre Diamine,
   ggf. A4) ein oder mehrere Katalysatoren,
   und die B-Komponente die Teilkomponenten
   B1) ein oder mehrere Diisocyanate
   und/oder
   B2) Prepolymere auf der Basis von Diolen mit 0 bis 50 Gew.-% freien (monomeren) Diisocyanaten
   umfassen,
   **dadurch gekennzeichnet, dass** die Umsetzung (Polyaddition) in Gegenwart einer weiteren Teilkomponente A5),
   enthaltend eine oder mehrere biozidwirksame Verbindungen mit mindestens einer -NH- oder -NH2-Funktion im Molekül,
   durchgeführt wird und gleichzeitig oder
   anschließend eine Weiterverarbeitung der Poly(urethan-harnstoffe) erfolgt.

2. Verfahren nach Anspruch 1,
   **dadurch gekennzeichnet, dass** die Umsetzung mit
   einem Hydroxyläquivalent einer oder mehrerer langkettigen Dihydroxylverbindungen wie Polyesterdiolen, Polyetherdiolen, Polytetrahydrofuranen, Polycaprolactonen, Polycarbonatdiolen und/oder Poly-α,ω-dihydroxy-butadienen (A1),
   einem bis acht Hydroxyläquivalente eines oder mehrerer kurzkettiger Diolen wie Butan-1,4-diol, Hexan-1,6-diol, Ethylenglykol, Diethylenglykol (A2),
   0,1 bis acht Aminäquivalente eines oder mehrerer sekundärer Diamine (A3),
   0,01 bis 1 Gew.-% bezogen auf die Komponente A1 eines oder mehrerer Katalysatoren (A4),
   0,001 bis vier Aminäquivalente einer oder mehrerer biozidwirksamer Verbindungen mit mindestens einer -NH- oder -NH2-Funktion im Molekül (A5)
   durchgeführt wird.

3. Verfahren nach Anspruch 1 oder 2, **dadurch gekennzeichnet, dass** die Umsetzung mit einer weiteren Teilkomponente A6) enthaltend ein oder mehrere Zusatzstoffe wie Flammschutzmittel, Pigmente, Farbstoffe, Mittel zur Verbesserung der thermischen Leitfähigkeit und Mittel zur Einstellung der elektrischen Leitfähigkeit in einer Menge von 0,01 bis 25 Gew.-% bezogen auf das Gesamtgemisch durchgeführt wird.

4. Verfahren nach einem der Ansprüche 1 bis 3, **dadurch gekennzeichnet, dass** das NH-Äquivalentverhältnis der sekundären Diamine A3) zu den Biozidmolekülen A5) wie (95 bis 3) : (5 : 97) beträgt.

5. Verfahren nach einem der Ansprüche 1 bis 4, **dadurch gekennzeichnet, dass** das NH-Äquivalentverhältnis der

sekundären Diamine A3) zu den Biozidmolekülen A5) wie (95 bis 55) : (5 : 55) beträgt.

6. Verfahren nach einem Ansprüche 1 bis 5, **dadurch gekennzeichnet, dass** die Teilkomponenten A1), A2), A3), ggf. A4), A5) und ggf. A6) in den vorherbestimmten Mengen zu einer Komponente A vorgemischt und mit der Komponente B (B1 u./o. B2) bei einer Temperatur von 80 bis 200°C in einem Reaktionsextruder zur Umsetzung gebracht werden und das Reaktionsprodukt anschließend durch Extrusion oder außerhalb des Extruders formgebend weiterverarbeitet wird.

7. Verfahren nach einem der Ansprüche 1 bis 6, **dadurch gekennzeichnet, dass** das Reaktionsprodukt nach der Umsetzung im Reaktionsextruder durch Schmelzen, Lösen oder Dispergieren in eine flüssige Phase gebracht wird, die dann formgebend weiterverarbeitet wird.

8. Verfahren nach einem der Ansprüche 1 bis 6, **dadurch gekennzeichnet, dass** die Komponente A und die Komponente B in einer Zone eines Reaktionsextruders miteinander vermischt und in einem Zwei-Phasen-Werkzeug auf ein weiteres, simultan extrudiertes thermoplastisches Material in einer Schichtstärke von 1 μm bis 10 mm aufgetragen und dieses Verbundmaterial anschließend auf Umgebungstemperatur gekühlt wird.

9. Verfahren nach einem der Ansprüche 1 bis 6 und 8, **dadurch gekennzeichnet, dass** die Komponente A und die Komponente B in einer Zone eines Reaktionsextruders miteinander vermischt und in einem Zwei-Phasen-Werkzeug auf ein metallisches Rohr oder einen flexiblen metallischen Schlauch oder einen flexiblen Segmentschlauch in einer Schichtstärke von 1 μm bis 10 mm aufgetragen und dieses Verbundmaterial anschließend auf Umgebungstemperatur gekühlt wird.

10. Verfahren nach einem der Ansprüche 1 bis 6, **dadurch gekennzeichnet, dass** die Komponente A und die Komponente B in einer Zone eines Reaktionsextruders miteinander vermischt und in einem Zwei-Phasen-Werkzeug auf ein weiteres, simultan extrudiertes thermoplastisches Material von einer Schichtstärke von 0,1 bis 10 mm in einer Schichtstärke von 1 μm bis 10 mm aufgetragen und dieser Verbund auf ein metallisches Rohr oder einen flexiblen metallischen Schlauch oder einen flexiblen Segmentschlauch in einer Schichtstärke von 0,1 mm bis 10 mm aufgetragen und dieser Verbund anschließend auf Umgebungstemperatur gekühlt wird.

11. Verfahren nach einem der Ansprüche 1 bis 6, **dadurch gekennzeichnet, dass** die Komponente A und die Komponente B in einer Zone eines Tripel-Reaktionsextruders miteinander vermischt werden, in einem Drei-Phasen-Werkzeug ein zu einem Schrumpfschlauch geeignetes Gemisch aus EPDM, Silan und Katalysator zu einem 10 bis 90 mm starken Schlauch mit einer Wandstärke von 1 bis 20 mm extrudiert, in diesen Schlauch aus im Werkzeug befindlichen Düsen ein EVA-Klebstoff mit einer Schichtstärke von 10 bis 500 μm aufgebracht, die erfindungsgemäßen Komponenten über einen Mischkopf in Düsen gegeben, durch die auf der Außenseite des Schlauches simultan ein thermoplastisches Material von einer Schichtstärke von 0,1 bis 10 mm aufgetragen und dieser Verbund ggf. nach einer Wärmebehandlung und einer Expansion mit Druckluft ggf. in einer Wärmevorrichtung, z. B. einem auf 50 bis 150°C temperierten Bad, unterworfen, anschließend auf Umgebungstemperatur gekühlt wird, so dass ein gegen den Angriff von Mikroorganismen geschützter Schrumpfschlauch hergestellt wird.

12. Thermoplastische Poly(urethan-harnstoffe) mit bioziden Eigenschaften, herstellbar nach einem der Ansprüche 1 bis 11.

13. Formkörper aus thermoplastischen Poly(urethan-harnstoffen) mit bioziden Eigenschaften, herstellbar nach einem der Ansprüche 1 bis 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0550875 A
- WO 03009879 A1
- US P5906825 A
- EP 0927222 A
- DE 102007006761 A1
- DE 102005048132 A1
- DE 102005048131 A1
- DE 102005034493 A1
- DE 2654014
- US OS20110011613 A1
- WO 2009148880 A2
- WO 2009102795 A1
- US PS6939554 B2


### In der Beschreibung aufgeführte Nicht-Patentliteratur


- **M. CHARNLEY ; M. TEXTOR ; C. ACIKGOZ.** Designed polymer structures with antifouling-antimicrobial properties. *Reactive & Functional Polymers,* 2011, vol. 71, 329-334
- **L. TIMOFEEVA ; N. KLESHCHEVA.** *Antimicrobial polymers, Appl. Microbiol. Biotechnol.,* 2011, vol. 89, 475-92